# EUROPEAN PATENT SPECIFICATION

(11) **EP 0 385 750 B1**
(45) Date of publication and mention of the grant of the patent: **08.06.1994**
(21) Application number: 90302127.7
(22) Date of filing: 28.02.1990
(51) Int. Cl.: H01R 13/633, G06K 7/06

(54) **Connector apparatus having an ejecting mechanism**
Steckvorrichtung mit einem Auswurfmechanismus
Dispositif de connexion avec mécanisme d'éjection

(30) Priority: 01.03.1989 JP 21982/89 U
(43) Date of publication of application: 05.09.1990
(73) Proprietor: E.I. DU PONT DE NEMOURS AND COMPANY, Wilmington Delaware 19898 (US)
(72) Inventor: Sakamoto, Haruo c/o DU PONT JAPAN, Yokohama-shi (JP)
(74) Representative: Barnard, Eric Edward

(56) References cited:
- EP-A- 0 022 194
- DE-A- 3 527 916
- GB-A- 2 205 000
- US-A- 4 372 635
- US-A- 4 381 131

## Description

The present invention relates to a connector apparatus for electrical connection to a flat IC pack, such as a memory card, and, in particular, to a connector apparatus having an ejecting mechanism for ejecting the IC pack.

An IC pack, such as a memory card, is inserted into a connector apparatus through an insertion opening of the connector apparatus to make an electrical connection with connector means of the connector apparatus. This electrical connection is achieved by engaging socket terminals of the IC pack arranged in an array with corresponding pin terminals of the connector means of the connector apparatus. Due to a great number of mating terminals involved, a relatively large force is required to eject the IC pack from the connector apparatus.

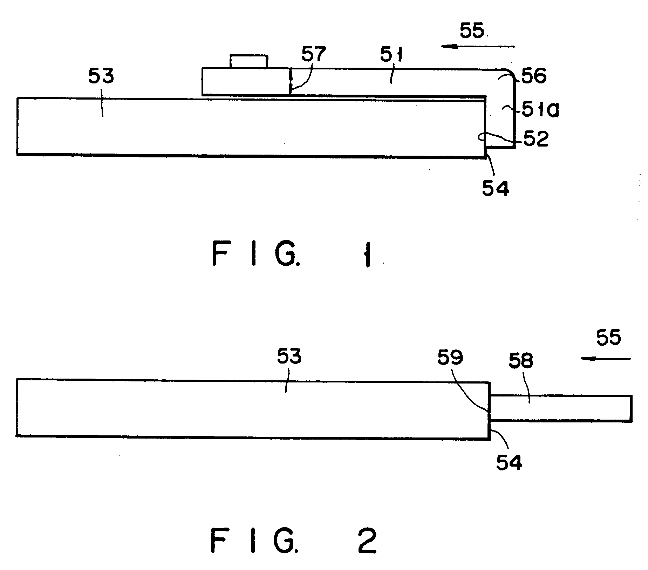

A conventional connector apparatus is shown in Figure 1. A sheet-like ejecting means 51 with a bent portion 51a provided at an end is employed in order to eject the memory card 53 from the connector apparatus. The ejecting means 51 is formed so that an inner face 52 of the bent portion of the engaging means 51 pushes a front end face 54 of the memory card 53 so as to be removed from the connector apparatus in an ejecting direction of an arrow 55. The ejecting means 51 needs a considerable thickness 57 and is required to be rigid enough to prevent deformation of a corner 56 by bending during the ejecting operation. It is, therefore, difficult to reduce the thickness of the connector apparatus as a whole.

Alternatively, there is a conventional bar-type ejecting lever 58 which pushes the front end face 54 of the memory card 53 as shown in Figure 2. In this case, the thickness of the connector apparatus including the ejecting lever can be thinner than the means of the type shown in Figure 1. However, the connector apparatus becomes relatively larger, because the ejecting lever is extensive in the longitudinal direction and requires a greater space in the connector apparatus.

GB-A-2 205 000 describes an IC pack connector having an ejector unit. The ejector unit is composed of a single eject member displaceably mounted on one surface of a base and is moved with a link and a push lever disposed on one side of the base. A locking mechanism is also provided which cooperates with the ejector unit.

It is an object of the present invention to provide a thin and compact connector apparatus having an ejecting mechanism which can operate reliably.

According to the present invention and as is known from GB-A-2 205 000 there is provided a connector apparatus for connection to an IC pack comprising housing means for receiving and holding the IC pack, connector means for making contact electrically with the inserted IC pack, and ejecting means operable to eject said IC pack from said connector means. In contrast to GB-A-2 205 000 and in accordance with the invention the ejecting means comprises two opposing sections sandwiching said housing means therebetween and at least two ejecting arms of generally U-shaped configuration extending from the opposing sections and each including a contacting section perpendicular to the opposing sections for contacting a first end of said IC pack.

Preferably lever means is provided for operating the ejecting means and is linked to the opposing sections of the ejecting means.

Preferably the lever means comprises two arms, one on each side of the housing means, each arm being connected at a first end to one of the opposing sections of the ejecting means and being pivotably mounted between the ends about a pivot on the housing means.

Preferably there is a button movable in the directions of insertion and withdrawal of the IC pack the button being linked to second ends of the lever arms.

Upon operation of the lever means of the connector apparatus, the contacting sections of the ejecting means are displaced in the direction toward the insertion section of the housing and hence the IC pack is ejected. Since the ejecting means is of such a type that it covers the front portion of the IC pack or memory card, it takes no extra space in the connector apparatus. Furthermore, since the ejecting means is driven at two locations, that is, at first and second opposing sections, during the ejecting operation, deformation of the ejecting means scarcely occurs even if the entire ejecting means is made up of a thin sheet. As a result, it is possible to assemble a connector device as a thin and compact unit.

The U-shaped arms of the ejecting means can be continuous but in another construction, each generally U-shaped arm itself comprises two members one extending from each of the opposing sections. The two members associated with each other to form each generally U-shaped arm need not necessarily contact each other.

This invention can be more fully understood from the following detailed description when taken in conjunction with the accompanying drawings, in which:
Figures 1 and 2 are cross-sectional views showing a prior art ejecting means and an IC pack or memory card in a conventional connector apparatus each;
Figure 3 is a perspective view showing a connector apparatus according to a first embodiment of the present invention;
Figure 4 is a perspective view showing an ejecting means of the connector apparatus of Figure 3;
Figure 5 is a cross-sectional view showing the ejecting means and the IC pack or memory card of the connector apparatus of Figure 3;
Figure 6 is a cross-sectional view similar to the Figure 5, of a connector apparatus according to a second embodiment of the present invention; and
Figure 7 is a cross-sectional view similar to the Figure 5, of a connector apparatus according to a third embodiment of the present invention.

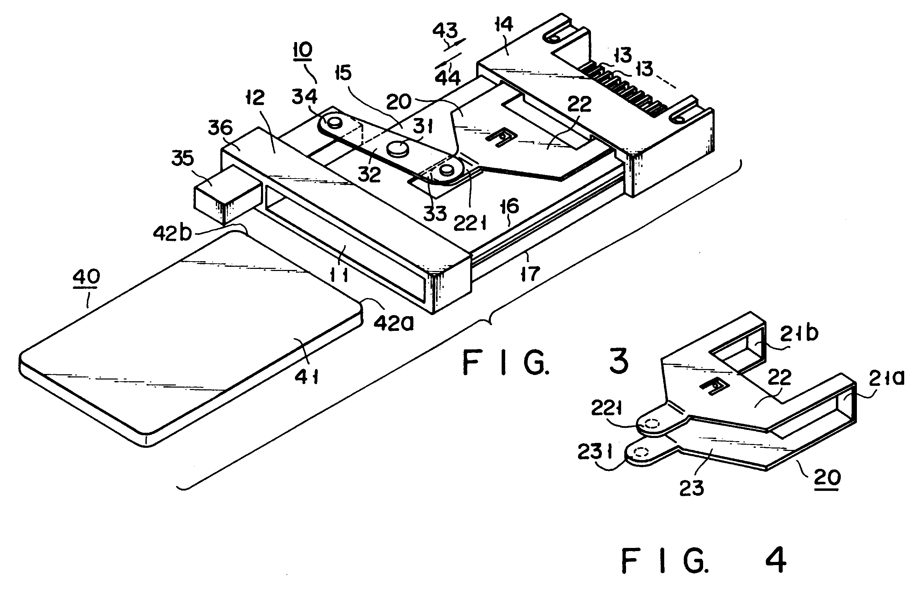

In Figure 3, a connector apparatus 10 according to one embodiment of the present invention and an IC pack or memory card 40 to be inserted into a connector apparatus 10 are shown.

The connector apparatus 10 comprises a housing means 15 having an insertion section 12 including an insertion opening 11 through which the memory card 40 is inserted and connector means 14 provided on a side opposite to the side of the insertion section 12 and including an array of a great number of pin terminals 13. The housing means 15 is disposed between the insertion section 12 and the connector means 14. The memory card 40 has a great number of socket terminals (not shown) in the front portion 41. When the memory card 40 is inserted into the connector apparatus 10, the socket terminals are each fitted over a corresponding pin terminal 13 to achieve electrical connection.

The housing means 15 of the connector apparatus 10 has flat sheet like upper and lower wall sections 16 and 17 extending parallel to one another.

The present connector apparatus comprises ejecting means for ejecting the inserted IC pack 40 from the connector. As shown in Figure 4, the ejecting means 20 has two ejecting arms having a U-shaped configuration. Two opposing sections 22, 23 of the ejecting means 20 sandwich the housing means 15, and are joined to the arms. The arms have contacting sections 21a, 21b perpendicular to the opposing sections 22, 23 which are arranged to contact the front end face of the IC pack 40 at regions 42a, 42b. Specifically, the ejecting means 20 is mounted over the flat sheet-like sections 16 and 17. The ejecting means 20 is generally U-shaped as shown in Figure 4 and has first and second opposing flat sections 22 and 23 and the contacting sections 21a, 21b which extend perpendicularly from the opposing sections 22, 23. The entire ejecting means 20 is made up of a rigid thin sheet and so shaped and dimensioned that, when the IC pack 40 is inserted between the first section 22 and the second section 23, the sections 21a and 21b of the ejecting means 20 confront both the end regions 42a and 42b of the front end face of the IC pack 40.

As shown in Figure 3, the ejecting means 20 is fitted over the housing means 15 such that the first and second sections 22 and 23 cover the outer surfaces of the first and second flat sheet like wall sections 16 and 17. The ejecting means 20 can be moved in both the directions in which the IC pack 40 is inserted into, and withdrawn from, the connector apparatus 10, that is, an inserting direction 43 from the insertion section 12 toward the connector section 14 and a withdrawing direction 44 from the connector section 14 toward the insertion section 12.

An extended end portion 221 of the first section 22 of the ejecting means 20 is connected to one end 33 of a first drive link or lever means 32. The first drive link 32 rotates with a pivot 31 as a centre, the pivot 31 being provided on the first flat sheet like wall section 16. The other end 34 of the first driven link 32 is connected to a button 35. Similarly, an extended end portion 231 of the second section 23 of the ejecting means 20 is connected to one end of the second drive link, (not shown), which rotates with a pivot as a centre, the pivot being provided on the second flat sheet like section 17. The other end of the second link is likewise connected to the button 35. The connection between the second section 23 and the second drive link has a positional symmetry with respect to the connection between the first section 22 and the first drive link 32. The button 35 is so mounted as to move through a frame 36 in the inserting/withdrawing direction of the IC pack 40, the frame 36 being located outside of the insertion opening 11. Upon the sliding of the button 35 in the direction of the arrow 43 toward the connector section 14, the ejecting means 20 is moved in the direction of an arrow 44 toward the insertion section 12 with partial rotation of the first and second drive links.

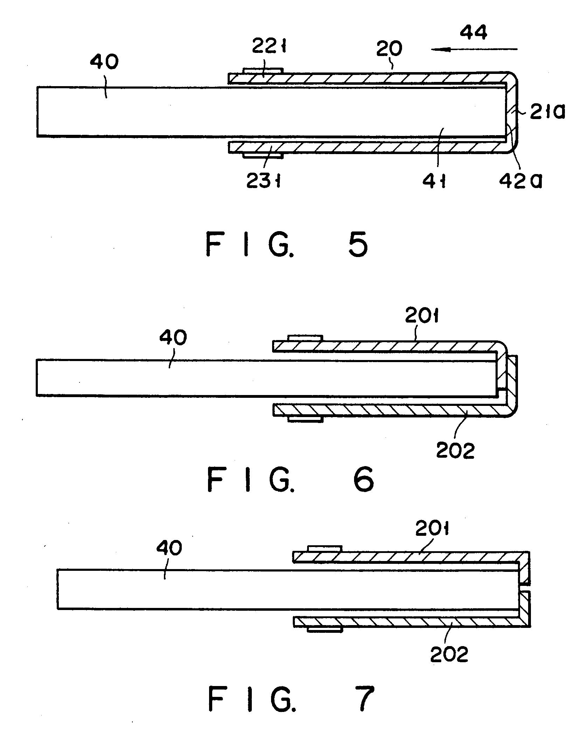

Figure 5 is a cross-section view showing the ejecting means 20 when the IC pack 40, which has been inserted into the connector apparatus of the present invention, is being ejected. During the ejecting operation, the vertical section 21a, 21b of the ejecting means are kept in contact with the front end region 42a, 42b of the IC pack 40, pushing out the IC pack 40 in the direction as indicated by the arrow 44.

If the ejecting means 20 is so constructed that it has a U-shape with the front section 41 of the memory card covered therewith, and driven through both the end portions 221 and 231, it is not deformed during the ejecting operation even if the ejecting means 20 is formed of a thin sheet.

In the aforementioned embodiment, the vertical sections 21a, 21b of the arms of the ejecting means 20 are continuous between one edge of the first section 16 and that of the second section 17. However, the arms of the ejecting means can also be formed of two separate members, that is, an upper member 201 and a lower member 202 as shown in Figures 6 and 7. The separate members 201, 202 need not be connected.

The connector apparatus of the present invention is easier to design and can be manufactured at lower cost. The connector apparatus can be more simply manufactured at low cost if is formed so as to have a positional symmetry between the first section 22 and the second section 23, or between the upper and lower members 201 and 202.

## Claims

1. A connector apparatus (10) for connection to an IC pack (40), said apparatus comprising:
housing means (15) for receiving and holding the IC pack (40), connector means (14) for making electrical contact with said inserted IC pack (40) and ejecting means (32) operable to eject said IC pack (40) from said connector means (14); characterised in that the ejecting means (20) comprises two opposing sections (22, 23) sandwiching said housing means (15) therebetween and at least two ejecting arms of generally U-shaped configuration extending from the opposing sections (22, 23) and each including a contacting section (21a, 21b) perpendicular to the opposing sections (22, 23) for contacting a first end (42a, 42b) of said IC pack (40).

2. A connector apparatus according to Claim 1, wherein the arms (21) and the opposing sections (22, 23) are formed integrally with one another.

3. A connector apparatus according to Claim 1, wherein each generally U-shaped arm (21) comprises two members (201, 202) each extending from one of the opposing sections (22, 23.

4. A connector apparatus according to Claim 3, wherein the two members (201, 202) which form each generally U-shaped arm (21) do not contact each other.

5. A connector apparatus according to any one of Claims 1 to 4, wherein the arms and the opposing sections (22, 23) are formed from thin sheet material.

6. A connector apparatus according to Claim 1 to 5 and further comprising lever means (32) for operating the ejecting means (20).

7. A connector apparatus according to Claim 6, wherein the lever means comprises two lever arms (32), one on each side (16, 17) of the housing means (15), each arm being connected at a first end to one of the opposing sections (22, 23) of the ejecting means (20) and being pivotably mounted between the ends about a pivot (31) on the housing means (15).

8. A connector apparatus according to Claim 6, wherein the lever arms (32) are connected to lever portions (221, 231) extending outwardly from the opposing sections (22, 23) remote from the contacting sections (21a, 21b).

9. A connector apparatus according to Claims 7 or 8, wherein there is a button (35) movable in the directions of insertion and withdrawal of the IC pack, the button (35) being linked to the second ends of the lever arms (32).

## Patentansprüche

1. Steckvorrichtung (10) zur Steckverbindung mit einer IC-Gruppe (40) mit einer Gehäuseeinrichtung (15) zur Aufnahme und Halterung der IC-Gruppe (40), einer Steckeinrichtung (14) zur Herstellung elektrischen Kontakts mit der eingesteckten IC-Gruppe (40) und einer Auswurfeinrichtung (32), die zum Auswerfen der IC-Gruppe (40) aus der Steckeinrichtung (14) betreibbar ist, dadurch gekennzeichnet, daß die Auswurfeinrichtung (20) zwei einander gegenüberliegende Abschnitte (22, 23) aufweist, die die Gehäuseeinrichtung (15) sandwichartig zwischen sich aufnehmen, sowie wenigstens zwei Auswurfarme (21) von insgesamt U-förmiger Anordnung, die sich von den einander gegenüberliegenden Abschnitten (22, 23) aus erstrecken und deren jeder einen zu den einander gegenüberliegenden Abschnitten (22, 23) senkrechten Kontaktabschnitt (21a, 21b) zur Herstellung eines Kontakts zu einem ersten Ende (42a, 42b) der IC-Gruppe (40) aufweist.

2. Steckvorrichtung nach Anspruch 1, wobei die Arme (21) und die einander gegenüberliegenden Abschnitte (22, 23) einteilig miteinander gebildet sind.

3. Steckvorrichtung nach Anspruch 1, wobei jeder insgesamt U-förmige Arm (21) zwei Teile (201, 202) aufweist, von denen jedes sich von einem der einander gegenüberliegenden Abschnitte (22, 23) aus erstreckt.

4. Steckvorrichtung nach Anspruch 3, wobei die beiden Teile (201, 202), die jedes einen insgesamt U-förmigen Arm (21) bilden, einander nicht berühren.

5. Steckvorrichtung nach einem der Ansprüche 1 bis 4, wobei die Arme und die einander gegenüberliegenden Abschnitte (22, 23) aus dünnem Blech gebildet sind.

6. Steckvorrichtung nach den Ansprüchen 1 bis 5, die weiterhin eine Hebeleinrichtung (32) zum Betrieb der Auswurfeinrichtung (20) aufweist.

7. Steckvorrichtung nach Anspruch 6, wobei die Hebeleinrichtung zwei Hebelarme (32) aufweist, einen auf jeder Seite (16, 17) der Gehäuseeinrichtung (15), und wobei jeder Arm mit einem ersten Ende eines der einander gegenüberliegenden Abschnitte (22, 23) der Auswurfeinrichtung (20) verbunden und schwenkbar zwischen den Enden an einem Drehzapfen (31) an der Gehäuseeinrichtung (15) befestigt ist.

8. Steckvorrichtung nach Anspruch 6, wobei die Hebelarme (32) mit Hebelteilen (221, 231), die sich entfernt von den Kontaktabschnitten (21a, 21b) von den einander gegenüberliegenden Abschnitten (22, 23) aus nach außen erstrecken, verbunden sind.

9. Steckvorrichtung nach einem der Ansprüche 7 oder 8, wobei ein in den Richtungen des Hineinsteckens und Herausziehens der IC-Gruppe (40) beweglicher Knopf (35) vorgesehen ist und wobei der Knopf (35) mit den zweiten Enden der Hebelarme (32) verbunden ist.

## Revendications

1. Un dispositif connecteur (10) pour raccordement à un module plat à circuits intégrés (40), ledit dispositif comprenant:
- un moyen de logement (15) pour recevoir et maintenir le module plat à circuit intégré (40);
- des moyens de raccordement (14) susceptibles de réaliser un contact électrique avec ledit module plat à circuit intégré inséré (40); et
- des moyens d'éjection (32) permettant, lors de leur fonctionnement, d'éjecter lesdits modules (40) desdits moyens de raccordement (14),
caractérisé en ce que les moyens d'éjection (20) comprennent deux sections opposées (22, 23) prenant en sandwich ledit moyen de logement (15) entre elles, et au moins deux bras d'éjection d'une configuration généralement en forme de U qui s'étendent à partir des sections opposées (22, 23) et qui comportent chacun une section de contact (21a, 21b) perpendiculaire aux sections opposées (22, 23) pour contacter une première extrémité (42a, 42b) dudit module plat à circuit intégré (40).

2. Un dispositif connecteur selon la revendication 1, dans lequel les bras (21) et les sections opposées (22, 23) sont formées monobloc les uns avec les autres.

3. Un dispositif connecteur selon la revendication 1, dans lequel chaque bras généralement en forme de U (21) comprend deux organes (201, 202) qui s'étendent chacun à partir de l'une des sections opposées (22, 23).

4. Un dispositif connecteur selon la revendication 3, dans lequel les deux organes (201, 202) constituant chacun des bras généralement en forme de U (21) ne viennent pas en contact l'un avec l'autre.

5. Un dispositif connecteur selon l'une quelconque des revendications 1 à 4, dans lequel les bras et les sections opposées (22, 23) sont réalisés en matériau mince en forme de feuille.

6. Un dispositif connecteur selon les revendications 1 à 5, comprenant en outre des moyens à levier (32) aptes à faire fonctionner les moyens d'éjection (20).

7. Un dispositif connecteur selon la revendication 6, dans lequel les moyens à levier comprennent deux bras de levier (32), l'un disposé de chaque côté (16, 17) des moyens de logement (15), chaque bras étant raccordé à une première extrémité à l'une des sections opposées (22, 23) des moyens d'éjection (20), en étant monté de façon pivotante entre ces extrémités sur un axe de pivotement (31) sur les moyens de logement (15).

8. Un dispositif connecteur selon la revendication 6, dans lequel les bras de levier (32) sont raccordés à des parties de levier (221, 231) qui s'étendent vers l'extérieur à partir des sections opposées (22, 23) et éloignées des sections de contact (21a, 21b).

9. Un dispositif connecteur selon la revendication 7 ou la revendication 8, comportant un bouton (35) susceptible de se déplacer dans les directions d'insertion et de retrait du module plat à circuit intégré, le bouton (35) étant raccordé aux deuxièmes extrémités des bras de levier (32).
